# EUROPÄISCHE PATENTSCHRIFT

(11) **EP 1 361 162 B1**
(45) Veröffentlichungstag und Bekanntmachung des Hinweises auf die Patenterteilung: **24.08.2005**
(21) Anmeldenummer: 03009121.9
(22) Anmeldetag: 22.04.2003
(51) Int. Cl.: B65D 5/02, C09J 7/02

(54) **Verwendung eines doppelseitig klebend ausgerüsteten Klebebands zum Verschliessen und Öffnen von Kartons oder kartonähnlichen Verpackungen**
Use of a double sided adhesive tape for closing and opening of cartons or the like
Utilisation d'un ruban adhésif double face pour fermer et ouvrir des cartons et analogues

(30) Priorität: 08.05.2002 DE 10220835
(43) Veröffentlichungstag der Anmeldung: 12.11.2003
(73) Patentinhaber: tesa AG, 20253 Hamburg (DE)
(72) Erfinder: Schwertfeger, Michael, 22147 Hamburg (DE); Görbig, Olaf, 22457 Hamburg (DE)

(56) Entgegenhaltungen:
- EP-A- 0 655 489
- US-A- 5 622 761

## Beschreibung

Die Erfindung betrifft die Verwendung eines doppelseitig klebend ausgerüsteten Klebebands zum Verschließen und Öffnen von Kartons oder kartonähnlichen Verpackungen.

Insbesondere bei Verpackungen aus Wellpappe stellt sich nach dem Verkleben der Verpackung das Problem, wieder an den Inhalt zu gelangen, und zwar auf möglichst einfache Art und Weise.

Dies erfolgt üblicherweise durch Zerschneiden oder Zerreißen und anschließendem Abziehen des aufgebrochenen Verpackungsteils. Alle diese Verfahren sind verhältnismäßig zeitaufwendig, und insbesondere für das Zerschneiden beziehungsweise Zerreißen werden zusätzliche Hilfsmittel benötigt, wie beispielsweise Scheren, Messer oder Schlüssel. Diese Hilfsmittel bedingen zudem eine Verletzungsgefahr beziehungsweise eine Gefahr der Beschädigung des Inhalts.

Bekannt ist auch die Verwendung von Aufreißstreifen, beispielsweise aus Kunststoff oder in Form eines dünnen Seils, an denen zum Öffnen gezogen wird und die dabei die zu öffnende Verpackung trennen oder reißen.

Allen Aufreißstreifen gemeinsam ist, daß diese lediglich vorhanden sind, den geschlossenen Karton beziehungsweise die geschlossene Verpackung zu öffnen.
Nicht ermöglichen es die bekannten Aufreißstreifen, unter Einsatz dieser die Verpackung zunächst zu verschließen und dann eine Öffnungshilfe bieten, also gleichzeitig ein Verschluß- und ein Öffnungsmittel zu sein.

Andererseits werden für den sicheren Verschluß eines Kartons doppelseitige Klebebänder angeboten, welche aber keine Aufreißhilfe bieten.

Aufgabe der vorliegenden Erfindung ist es, ein Verschlußband für Kartons oder vergleichbare Verpackungen zu schaffen, das gleichzeitig eine Öffnungshilfe bietet, also die Kombination zweier bisher völlig getrennter Funktionen in einer Lösung.

Gelöst wird diese Aufgabe durch die Verwendung eines doppelseitig klebend ausgerüsteten Klebebands zum Verschließen und Öffnen von Kartons oder kartonähnlichen Verpackungen. Gegenstand der Unteransprüche sind vorteilhafte Fortbildungen des Erfindungsgegenstands.

Demgemäß beschreibt die Erfindung die Verwendung eines doppelseitig klebend ausgerüsteten Klebebands zum Verschließen und Öffnen von Kartons oder kartonähnlichen Verpackungen, wobei zumindest eine der beiden Klebeschichten des doppelseitig klebend ausgerüsteten Klebebands in Längsrichtung des Trägermaterials in Form eines zumindest partiell vorhandenem Streifens aufgebracht ist, der eine geringere Breite aufweist als das Trägermaterial des Klebebands.
Das Verkleben des Klebebands zwischen den zwei Lagen beziehungsweise Laschen des Kartons oder der kartonähnlichen Verpackungen erfolgt derart, daß der nicht von der Klebeschicht bedeckte Teil des Trägermaterials ebenfalls zwischen den zwei Lagen beziehungsweise Laschen liegt.

In einer bevorzugten Ausführungsform ist die obere der beiden Klebeschichten vollflächig auf dem Trägermaterial aufgebracht, während die untere in Form eines zumindest partiell vorhandenem Streifens vorhanden ist.

Das erfindungsgemäße Klebeband dient zunächst dazu, den Karton zu verschließen.
Hierzu wird das die untere Klebeschicht, also die, die bevorzugt in Form eines zumindest partiell vorhandenem Streifen ausgebildet ist, abdeckende Trennpapier oder die Trennfolie von der Klebeschicht entfernt.

Das Klebeband wird zwischen zwei zu miteinander zu verklebende Lagen beziehungsweise Laschen des Kartons oder der kartonähnlichen Verpackungen aufgebracht, wobei das Verkleben des Klebebands zwischen den zwei Lagen beziehungsweise Laschen derart erfolgt, daß der nicht von der Klebeschicht bedeckte Teil des Trägermaterials ebenfalls zwischen den zwei Lagen beziehungsweise Laschen liegt.
Hierzu wird gegebenenfalls noch das die zweite Klebeschicht abdeckende Trennpapier oder die Trennfolie abgezogen.

Auf diese Art und Weise ist gewährleistet, daß das beidseitig klebend ausgerüstete Klebeband die beiden Lagen beziehungsweise Laschen des Kartons, die den Verschluß bilden, zunächst fest miteinander verbindet, so daß ein unerwünschtes Aufgehen des Kartons vermieden wird. Auf der anderen Seite ist ein Teil zumindest einer Klebeschicht des Klebebands nicht klebend.

Vorzugsweise erstreckt sich der nicht von der Klebeschicht bedeckte Teil beginnend an einem Rand des Trägermaterials in Richtung der Mitte des Trägermaterials.

Als besonders vorteilhaft hat es sich erwiesen, wenn der nicht von der Klebeschicht bedeckte Teil 30 % der Klebebandbreite einnimmt, also bezogen auf die Breite des Klebebands 70 % klebend sind. Weitere vorteilhafte Werte des nicht von der Klebeschicht bedeckten Teils sind 50 % oder 70 %.
Selbstverständlich liegt es innerhalb des fachmännischen Könnens, von den genannten Werten nach oben oder unten auszuweichen, wenn es der Anwendungsfall erfordert.

Weiter vorzugsweise weist der nicht von der Klebeschicht bedeckte Teil eine Breite 3 bis 7 mm, insbesondere 5 mm auf.

Um den Aufreißvorgang weiter zu erleichtern, kann es aber auch vorteilhaft sein, die Sollbruchstelle bis in das Klebeband hinein durchzuführen, also beispielsweise das Trägermaterial des Klebebands ebenfalls zu schwächen, insbesondere spalten.
Dadurch können auch sehr reißfeste Trägermaterialien des Klebebandes beim Aufreißvorgang sicher durchtrennt werden.

Die Schwächungslinie im Trägermaterial des Klebebands liegt in einer hervorragend gestalteten Ausführungsform des Klebebands unterhalb der Kante, die sich auf der einen Seite des Trägermaterials zwischen dem klebfreien Streifen und der klebenden Beschichtung ergibt.

Bei der Verklebung von zwei aufeinander gefalteten Laschen eines Kartons, also einer oberen und einer unteren Lasche, deren Innenkanten jeweils mit dem Kartonkörper verknüpft sind, während jeweils die Außenkanten frei auslaufen, ist bevorzugt darauf zu achten, daß der klebfreie Streifen so auf der unteren Lasche des Kartons liegt, daß der Streifen auf der der Außenkante zugewandten Seite der Lasche liegt, während die Klebeschicht der gleichen Seite des Trägermaterials der Außenkante der unteren Lasche der Kartonage zugewandt ist.

Beim Aufreißen spaltet das Klebeband und gleichzeitig die obere Lasche, so daß das von der oberen Lasche abgetrennte Teil auf dem Trägermaterial verbleibt und abgenommen wird, so daß die ehemals verklebte obere Lasche aufgeklappt werden kann.

Vorzugsweise sind die Lagen beziehungsweise Laschen des Kartons oder der kartonähnlichen Verpackungen, die an dem nicht von der Klebeschicht bedeckten Streifen anliegt, oberhalb und/oder unterhalb des Streifens geschwächt, besonders geschlitzt.
Der beziehungsweise die durch zumeist zwei Einschnitte in der Lage beziehungsweise Lasche oder Lagen beziehungsweise Laschen erzeugten Schlitze entsprechen in der Breite dabei vorzugsweise ungefähr der Breite des klebefreien Streifens auf dem Trägermaterial.

Um letztendlich den Karton wieder zu öffnen, also die beiden Lagen beziehungsweise Laschen aufzutrennen, gibt es somit zwei vorteilhafte Verfahren.

Der klebfreie Streifen des Klebebands kann keine Verklebung zu der darüber oder darunter befindlichen Lage beziehungsweise Lasche des Kartons eingehen.
Dieser Streifen bildet somit den ersten Teils eines Anfassers, der besonders gut zu greifen ist, wenn in der oberen Lasche oder Lage zwei Schlitze vorhanden sind.

Je nachdem auf welcher Lage beziehungsweise Lasche der klebefreie Streifen des Klebebands anliegt, wird entweder ein Anfasser gegriffen, der sich aus einem Teil der oberen Lage beziehungsweise Lasche und einem Teil des Klebebands zusammensetzt. Beim Ziehen am Anfasser spalten das Klebeband und die aufzutrennende Lage beziehungsweise Lasche des Kartons.

Oder es wird ein Anfasser gegriffen, der sich aus einem Teil der oberen Lage beziehungsweise Lasche, einem Teil des Klebebands und aus einem Teil der unteren Lage beziehungsweise Lasche zusammensetzt. Beim Ziehen am Anfasser spalten das Klebeband und die aufzutrennenden obere und untere Lage beziehungsweise Lasche des Kartons.

Die Trägerschicht des Klebebands kann in bevorzugter Variante gebildet werden von Folien (zum Beispiel aus PUR, PE oder PP, Polyester wie PET, PA), Vliesen, Geweben, Schäumen, metallisierte Folien, Verbundstoffe, Baumwolle, Laminaten, geschäumten Folien, Papier etc. Sehr vorteilhaft ist, wenn die Trägerschicht leicht zu reißen beziehungsweise trennen ist.

Als Trägerschicht dient vorzugsweise eine thermoplastische Polyolefinfolie, welche unverstreckt ist und mindestens ein Polyolefin aus der Gruppe der Polyethylene (zum Beispiel HDPE, LDPE, MDPE, LLDPE, VLLDPE, Copolymere des Ethylens mit polaren Comonomeren) und der Gruppe der Polypropylene (zum Beispiel Polypropylen-Homopolymere, Polypropylen-Random-Copolymere oder Polypropylen-Block-Copolymere) enthält.
Bevorzugt werden Mischungen verschiedener geeigneter Polyolefine verwendet, um die mechanischen und thermischen Eigenschaften sowie Glanz, Extrusionsverhalten, Verankerung des Klebers, usw. optimal einstellen zu können.

Erfindungsgemäß hervorragend als Folien einsetzen lassen sich monoaxial und biaxial gereckte Folien auf Basis von Polyolefinen, dann Folien auf Basis von gerecktem Polyethylen oder gereckten Copolymeren, enthaltend Ethylen- und/oder Polypropyleneinheiten.

Monoaxial gerecktes Polypropylen zeichnet sich durch seine sehr hohe Reißfestigkeit und geringe Dehnung in Längsrichtung aus und wird beispielsweise zur Herstellung von Strapping Tapes verwendet. Besonders bevorzugt sind monoaxial gereckte Folien auf Basis von Polypropylen.

Die Dicken der monoaxial gereckten Folien auf Basis von Polypropylen liegen bevorzugt zwischen 0,2 und 0,5 mm, insbesondere zwischen 0,23 und 0,28 mm.

Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Weiterhin besonders bevorzugt sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5.

Polyester sind Polymere, deren Grundbausteine durch Ester-Bindungen (-CO-O-) zusammengehalten werden. Nach ihrem chemischen Aufbau lassen sich die sogenannten Homopolyester in zwei Gruppen einteilen,
- die Hydroxycarbonsäure-Typen (AB-Polyester) und
- die Dihydroxy-Dicarbonsäure-Typen (AA-BB-Polyester).

Erstere werden aus nur einem einzigen Monomer durch zum Beispiel Polykondensation einer ω-Hydroxycarbonsäure 1 oder durch Ringöffnungspolymerisation cyclischer Ester (Lactone) 2 hergestellt, zum Beispiel

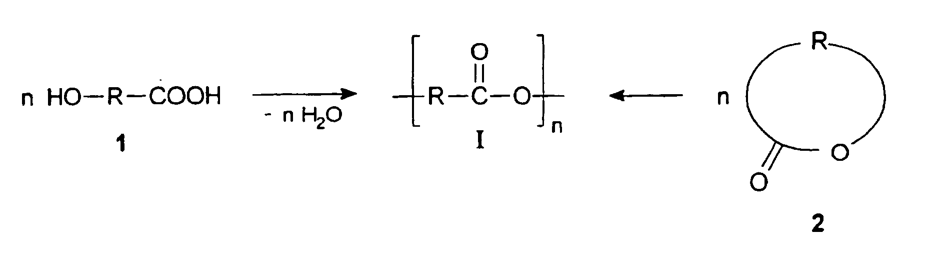

Der Aufbau letzterer erfolgt dagegen durch Polykondensation zweier komplementärer Monomerer, zum Beispiel einem Diol 3 u. einer Dicarbonsäure 4:

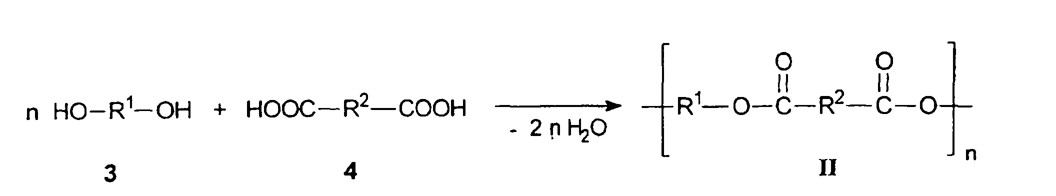

Verzweigte und vernetzte Polyester werden bei der Polykondensation von drei- oder mehrwertigen Alkoholen mit polyfunktionellen Carbonsäuren erhalten. Zu den Polyestern werden allgemein auch die Polycarbonate (Polyester der Kohlensäure) gerechnet.

AB-Typ-Polyester (I) sind u. a. Polyglykolsäuren (Polyglykolide, R = CH2), Polymilchsäuren (Polylactide, R = CH-CH3), Polyhydroxybuttersäure [Poly(3-hydroxybuttersäure), R = CH(CH3)-CH2], Poly(ε-caprolacton)e [R = (CH2)5] und Polyhydroxybenzoesäuren (R = C6H4).

Rein aliphatische AA-BB-Typ-Polyester (II) sind Polykondensate aus aliphatischen Diolen und Dicarbonsäuren, die u. a. als Produkte mit endständigen Hydroxy-Gruppen (als Polydiole) für die Herstellung von Polyesterpolyurethanen eingesetzt werden [zum Beispiel Polytetramethylenadipat; R1 = R2 = (CH2)4].
Mengenmäßig größte technische Bedeutung haben AA-BB-Typ-Polyester aus aliphatischen Diolen und aromatischen Dicarbonsäuren, insbesondere die Polyalkylenterephthalate [R2 = C6H4, mit Polyethylenterephthalat (PET) R1 = (CH2)2, Polybutylenterephthalat (PBT) R1 = (CH2)4 u. Poly(1,4-cyclohexandimethylenterephthalat)e (PCDT) R1 = CH2-C6H10-CH2] als wichtigste Vertreter. Diese Typen von Polyester können durch Mitverwenden anderer aromatischer Dicarbonsäuren (zum Beispiel Isophthalsäure) bzw. durch Einsatz von Diol-Gemischen bei der Polykondensation in ihren Eigenschaften breit variiert u. unterschiedlichen Anwendungsgebieten angepaßt werden.

Rein aromatische Polyester sind die Polyarylate, zu denen u. a. die Poly(4-hydroxybenzoesäure) (Formel I, R = C6H4), Polykondensate aus Bisphenol A und Phthalsäuren (Formel II, R1 = C6H4-C(CH3)2-C6H4, R2 = C6H4) oder auch solche aus Bisphenolen und Phosgen gehören.

Beispielsweise ist ein metallocen-Polyethylen-Vliesstoff als Trägerschicht geeignet.

Der metallocen-Polyethylen-Vliesstoff weist vorzugsweise folgende Eigenschaften auf:
- ein Flächengewicht von 40 bis 200 g/m², insbesondere von 60 bis 120 g/m², und/oder
- eine Dicke von 0,1 bis 0,6 mm, insbesondere von 0,2 bis 0,5, und/oder
- eine Höchstzugkraft-Dehnung längs von 400 bis 700 % und/oder
- eine Höchstzugkraft-Dehnung quer von 250 bis 550 %.

Als Trägermaterial für das Klebeband können dann alle bekannten textilen Träger wie Maschenwaren, Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasem Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.
Abstandsgewebe oder -gewirke sind u. a. in zwei Artikeln beschrieben, und zwar
einem Artikel aus der Fachzeitschrift "kettenwirk-praxis 3/93", 1993, Seiten 59 bis 63
"Raschelgewirkte Abstandsgewirke"
und
einem Artikel aus der Fachzeitschrift "kettenwirk-praxis 1/94", 1994, Seiten 73 bis 76
"Raschelgewirkte Abstandsgewirke"
auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.
Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers läßt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die erfindungsgemäße Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleibt, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser inline oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Maschenwaren sind textile Flächengebilde hergestellt aus einem oder mehreren Fäden oder Fadensystemen durch Maschenbildung (Fadenschleifen), im Unterschied zu Webwaren (Geweben), bei der die Fläche durch Verkreuzen von zwei Fadensystemen (Kett- und Schußfäden) hergestellt wird und den Vliesen (Faserverbundstoffen), bei denen ein loser Faserflor durch Wärme, Nadelung, Nähen oder durch Wasserstrahlen verfestigt wird.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.

Von sehr hoher Bedeutung für das Trägermaterial insgesamt ist, daß dies in Längsrichtung, also in Laufrichtung des Klebebandes, spaltbar ist.

Ebenso ist es sehr vorteilhaft, wenn die vollflächig auf dem Trägermaterial aufgebrachte Klebemasse auch spaltbar ist.

Als selbstklebende Masse kommt insbesondere eine handelsübliche druckempfindliche Klebmasse auf PUR, Acrylat- oder Kautschukbasis zum Einsatz.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird. Diesen auf diesem Wege hergestellten Acrylatmassen wird in einem Zwischenschritt das Lösungsmittel vollständig entzogen.
Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.
Die Klebemasse auf Acrylathotmelt-Basis kann aber auch chemisch vernetzt sein.
In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Im folgenden soll die Erfindung anhand mehrerer Figuren näher erläutert werden, ohne damit die Erfindung unnötig einschränken zu wollen.

Es zeigen
- Figur 1: ein erfindungsgemäßes doppelseitig klebend ausgerüstetes Klebeband zum Verschließen und Öffnen von Kartons oder kartonähnlichen Verpackungen während der Anwendung als Verschlußband für einen Karton,
- Figur 2: das in Figur 1 gezeigte doppelseitig klebend ausgerüstetes Klebeband während der Anwendung als Öffnungshilfe für einen Karton,
- Figur 3: ein erfindungsgemäßes doppelseitig klebend ausgerüstetes Klebeband zum Verschließen und Öffnen von Kartons oder kartonähnlichen Verpackungen während der Anwendung als Verschlußband für einen Karton, wobei das Klebeband gegenüber dem Klebeband gemäß Figur 1 in einer alternativen art angewendet wird,
- Figur 4: das in Figur 4 gezeigte doppelseitig klebend ausgerüstete Klebeband während der Anwendung als Öffnungshilfe für einen Karton.

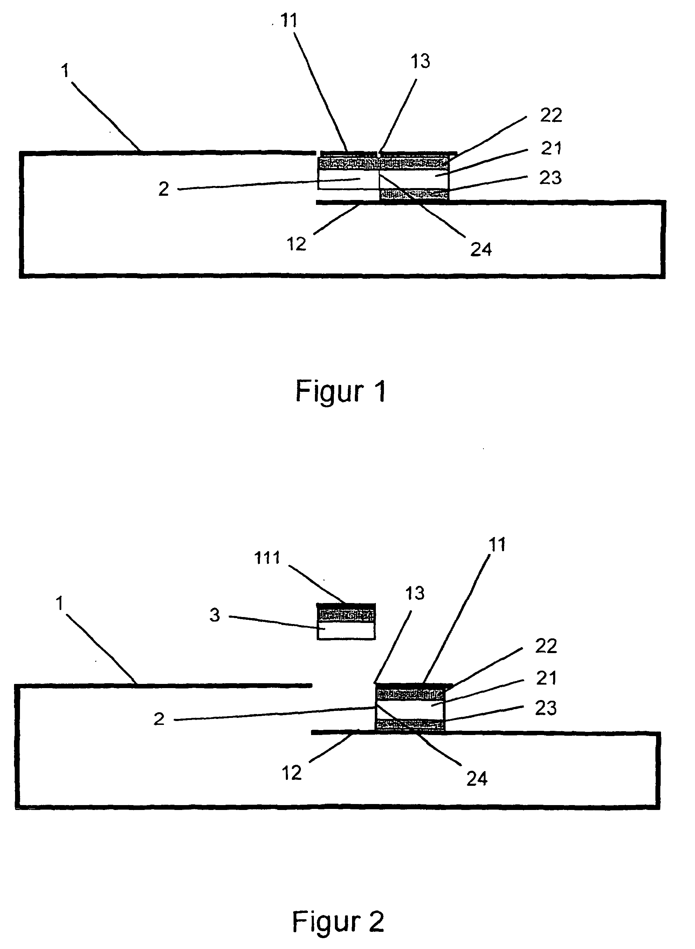

In der Figur 1 ist ein erfindungsgemäßes doppelseitig klebend ausgerüstetes Klebeband 2 zum Verschließen und Öffnen eines Karton 1 gezeigt, der sehr stilisiert im seitlichen Schnitt dargestellt ist.

Das Klebeband 2 besteht aus einer Trägerschicht 21, die auf der oberen und auf der unteren Seite mit jeweils einer Klebebeschichtung 22, 23 versehen ist.
Die untere Klebebeschichtung 23 ist dabei nicht vollflächig, sondern partiell aufgetragen, so daß auf dem Trägermaterial 21 ein klebefreier Streifen vorhanden ist.

Das erfindungsgemäße Klebeband 2 zeichnet sich dadurch aus, daß die obere der beiden Klebeschichten 22, 23 des doppelseitig klebend ausgerüsteten Klebebands 2 vollflächig, die untere partiell aufgetragen ist.

Die Verklebung des Klebebands 2 erfolgt derart, daß der klebfreie Streifen so auf der unteren Lasche 12 des Kartons 1 liegt, daß der Streifen auf der der Außenkante zugewandten Seite der Lasche 12 liegt, während die Klebeschicht 23 von der Außenkante der unteren Lasche 12 der Kartonage 1 abgewandt ist.

Das Verkleben des Klebebands 2 zwischen den zwei Laschen 11, 12 des Kartons 1 erfolgt somit derart, daß der klebefreie Streifen auf dem Trägermaterial 21 ebenfalls zwischen den zwei Laschen 11, 12 liegt.

Somit wird der Verschluß des Kartons 1 sichergestellt, indem die vollflächige obere Klebeschicht 22 mit der oberen Lasche 11 des Kartons 1 fest verklebt ist und indem gleichzeitig die untere Klebeschicht 23 auf der unteren Lasche 12 des Kartons 2 haftet.

Um den Öffnungsvorgang später zu erleichtern, ist das Trägermaterial 21 des Klebebands 2 mittels einer Schwächungslinie 24, insbesondere einem Spalt, geschwächt.
Dadurch können auch sehr reißfeste Trägermaterialien 21 des Klebebandes 2 beim Aufreißvorgang sicher durchtrennt werden.

Die Schwächungslinie im Trägermaterial 21 des Klebebands 2 liegt dabei oberhalb der Kante, die sich auf der unteren Seite des Trägermaterials 21 zwischen dem klebfreien Streifen und der klebenden Beschichtung 23 ergibt.

Des weiteren ist die obere Lasche 11 des Kartons 1 ebenfalls durch zwei Schwächungslinien 13 in ihrer Stabilität beeinträchtigt.
Der Abstand zwischen den durch zwei Einschnitte in der oberen Lasche 11 erzeugten Schlitze 13 entspricht ungefähr der Breite des klebefreien Streifens auf dem Trägermaterial 21.

In Figur 2 wird das in Figur 1 gezeigte doppelseitig klebend ausgerüstetes Klebeband während der Anwendung als Öffnungshilfe für einen Karton offenbart.

Der Karton wird aufgerissen, indem an dem Trägermaterial 21 gezogen wird, und zwar an einer Stelle, an der sich der klebefreie Streifen befindet, was zur Spaltung des Trägermaterials 21 sowie der oberen Lasche 11 des Kartons 1 führt.
Es ergibt sich ein Aufreißstreifen 3, der sich aus einem Teil 111 der oberen Lasche 11, einem Teil der gespalteten Klebemasse 22 sowie einem Teil des gespaltenen Trägermaterials 21 zusammensetzt.

Durch das Spalten wird die Lasche 11 derart getrennt, daß das äußere Teil der Lasche 11 weiterhin vom Restklebeband 2 mit der unteren Lasche 12 verklebt ist.
Nunmehr kann die ehemals verklebte Lasche 11 aufgeklappt werden.

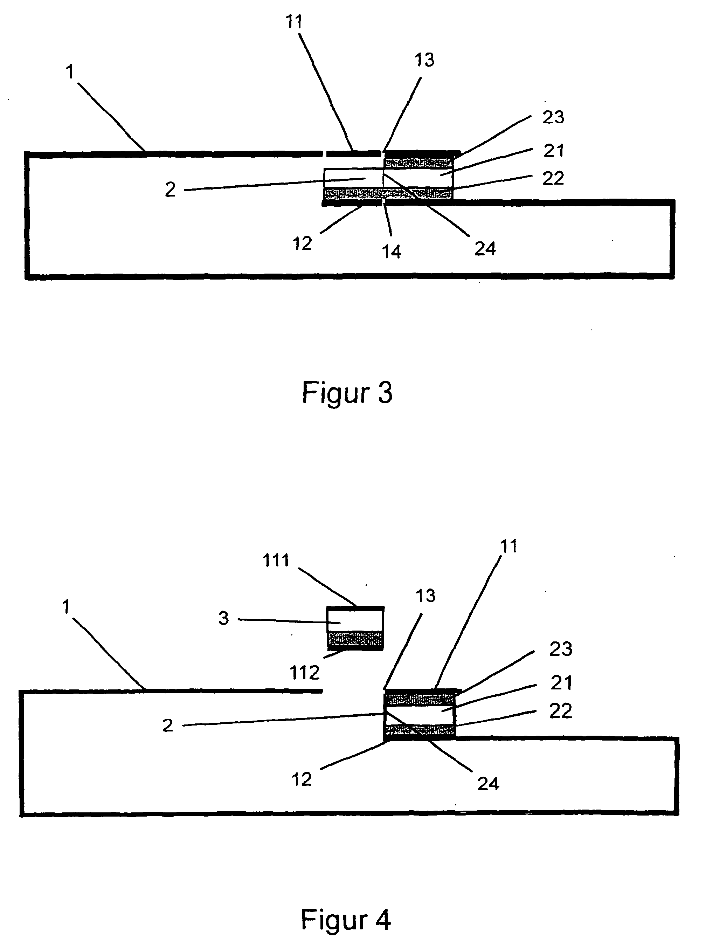

Figur 3 zeigt ein erfindungsgemäßes doppelseitig klebend ausgerüstetes Klebeband 2 zum Verschließen und Öffnen von einem Karton 1 während der Anwendung als Verschlußband für einen Karton 1, wobei das Klebeband 2 gegenüber dem Klebeband 2 gemäß Figur 1 in einer alternativen Art angewendet wird.

Die Verklebung des Klebebands 2 erfolgt derart, daß der klebfreie Streifen so unterhalb der oberen Lasche 11 des Kartons 1 liegt, daß der Streifen auf der der Außenkante zugewandten Seite der Lasche 11 liegt, während die Klebeschicht 23 von der Außenkante der oberen Lasche 11 der Kartonage 1 abgewandt ist.

Des weiteren ist die untere Lasche 12 des Kartons 1 ebenfalls durch eine Schwächungslinie 14 in ihrer Stabilität beeinträchtigt.

In Figur 4 ist das in Figur 3 gezeigte erfindungsgemäß doppelseitig klebend ausgerüstete Klebeband während der Anwendung als Öffnungshilfe für einen Karton dargestellt.

Der Karton wird aufgerissen, indem an der unteren Lasche 12 gezogen wird, was zur Spaltung des Trägermaterials 21, der oberen Lasche 11 des Kartons 1 sowie der unteren Lasche 12 führt.
Es ergibt sich ein Aufreißstreifen 3, der sich aus einem Teil 111 der oberen Lasche 11, aus einem Teil 112 der unteren Lasche 12, einem Teil der gespalteten Klebemasse 22 sowie einem Teil des gespaltenen Trägermaterials 21 zusammensetzt.

Durch das Spalten werden die Lasche 11 und die Lasche 12 derart getrennt, daß das äußere Teil der Lasche 11 weiterhin vom Restklebeband 2 mit der unteren Lasche 12 verklebt ist.
Nunmehr kann die ehemals verklebte Lasche 11 aufgeklappt werden.

## Patentansprüche

1. Verwendung eines doppelseitig klebend ausgerüsteten Klebebands zum Verschließen und Öffnen von Kartons oder kartonähnlichen Verpackungen, wobei zumindest eine der beiden Klebeschichten des doppelseitig klebend ausgerüsteten Klebebands in Längsrichtung des Trägermaterials in Form eines zumindest partiell vorhandenem Streifens aufgebracht ist, der eine geringere Breite aufweist als das Trägermaterial des Klebebands, wobei das Verkleben des Klebebands zwischen den zwei Lagen beziehungsweise Laschen des Kartons oder der kartonähnlichen Verpackungen derart erfolgt, daß der nicht von der Klebeschicht bedeckte Teil des Trägermaterials ebenfalls zwischen den zwei Lagen beziehungsweise Laschen liegt.

2. Verwendung nach Anspruch 1, **dadurch gekennzeichnet, daß** der nicht von der Klebeschicht bedeckte Teil sich beginnend an einem Rand des Trägermaterials in Richtung der Mitte des Trägermaterials erstreckt.

3. Verwendung nach den Ansprüchen 1 oder 2, **dadurch gekennzeichnet, daß** der nicht von der Klebeschicht bedeckte Teil eine Breite 3 bis 7 mm, insbesondere 5 mm aufweist.

4. Verwendung nach zumindest einem der Ansprüche 1 bis 3, **dadurch gekennzeichnet, daß** der nicht von der Klebeschicht bedeckte Teil 30 % der Klebebandbreite einnimmt.

5. Verwendung nach zumindest einem der vorherigen Ansprüche, **dadurch gekennzeichnet, daß** das Trägermaterial des Klebebands geschwächt ist, vorzugsweise gespalten.

6. Verwendung nach zumindest einem der vorherigen Ansprüche, **dadurch gekennzeichnet, daß** die Lagen beziehungsweise Laschen des Kartons oder der kartonähnlichen Verpackungen, die an dem nicht von der Klebeschicht bedeckten Streifen anliegt, oberhalb und/oder unterhalb des Streifens geschwächt sind, insbesondere der Breite des klebefreien Streifens auf dem Trägermaterial angepaßt.

7. Verwendung nach zumindest einem der vorherigen Ansprüche, **dadurch gekennzeichnet, daß** das Trägermaterial aus einem als Aufreisstreifen geeignetem reißfesten Material besteht, vorzugsweise MOPP oder Filament, und/oder aus einem in Längsrichtung leicht zu trennendem Material besteht, vorzugsweise MOPP, Filament oder PET.

## Claims

1. Use of a double sided adhesive tape for sealing and opening cartons or cartonlike packages, at least one of the two films of adhesive of the double sided adhesive tape being present applied in the lengthwise direction of the carrier material in the form of a strip which is present at least partially and which is narrower than the carrier material of the adhesive tape, the bonding of the adhesive tape between the two plies or flaps of the carton or of the cartonlike packages taking place in such a way that the part of the carrier material not covered by the film of adhesive is likewise situated between the two plies or flaps.

2. Use according to Claim 1, **characterized in that** the part not covered by the film of adhesive extends, beginning at one edge of the carrier material, in the direction of the centre of the carrier material.

3. Use according to Claim 1 or 2, **characterized in that** the part not covered by the film of adhesive has a width of from 3 to 7 mm, in particular 5 mm.

4. Use according to at least one of Claims 1 to 3, **characterized in that** the part not covered by the film of adhesive occupies 30% of the width of the adhesive tape.

5. Use according to at least one of the preceding claims, **characterized in that** the carrier material of the adhesive tape is weakened, preferably split.

6. Use according to at least one of the preceding claims, **characterized in that** the plies or flaps of the carton or of the cartonlike packages which lie against the strip not covered by the film of adhesive are weakened above and/or below the strip, adapted in particular to the width of the adhesive-free strip on the carrier material.

7. Use according to at least one of the preceding claims, **characterized in that** the carrier material is composed of a tensile material suitable as a tear-open strip, preferably of MOPP or filament, and/or is composed of a material which is easy to separate in the lengthwise direction, preferably MOPP, filament or PET.

## Revendications

1. Utilisation d'une bande adhésive double face pour la fermeture et l'ouverture de boîtes en carton ou d'emballages analogues à une boîte en carton, au moins une des deux couches adhésives de la bande adhésive double face étant appliquée dans le sens longitudinal du matériau support sous forme d'une bandelette au moins partiellement présente, qui présente une largeur inférieure au matériau support de la bande adhésive, le collage de la bande adhésive entre les deux couches ou rabats de la boîte en carton ou des emballages analogues à une boîte en carton est réalisé de telle manière que la partie non recouverte par la couche adhésive du matériau support se situe également entre les deux couches ou rabats.

2. Utilisation selon la revendication 1, **caractérisée en ce que** la partie non recouverte par la couche adhésive s'étend à partir d'un bord du matériau support vers le centre du matériau support.

3. Utilisation selon les revendications 1 ou 2, **caractérisée en ce que** la partie non recouverte par la couche adhésive présente une largeur de 3 à 7 mm, en particulier de 5 mm.

4. Utilisation selon au moins l'une quelconque des revendications 1 à 3, **caractérisée en ce que** la partie non recouverte par la couche adhésive représente 30% de la largeur de la bande adhésive.

5. Utilisation selon au moins l'une quelconque des revendications précédentes, **caractérisée en ce que** le matériau support de la bande adhésive est affaibli, de préférence fendu.

6. Utilisation selon au moins l'une quelconque des revendications précédentes, **caractérisée en ce que** les couches ou les rabats de la boîte en carton ou des emballages analogues à une boîte en carton, qui se placent contre la bandelette non recouverte par la couche adhésive, sont affaiblis au-dessus et/ou au-dessous de la bandelette, en particulier de manière adaptée à la largeur de la bandelette sans adhésif sur le matériau support.

7. Utilisation selon au moins l'une quelconque des revendications précédentes, **caractérisée en ce que** le matériau support est constitué par un matériau résistant à la déchirure approprié comme bande de déchirure, de préférence en MOPP ou un filament, et/ou par un matériau pouvant être facilement dissocié dans le sens longitudinal, de préférence en MOPP, filament ou PET.
